# EUROPEAN PATENT SPECIFICATION

(11) **EP 2 541 805 B1**
(45) Date of publication and mention of the grant of the patent: **10.04.2019**
(21) Application number: 10846061.9
(22) Date of filing: 22.02.2010
(51) Int. Cl.: H04B 10/50, H04B 10/516

(54) **OPTICAL TRANSMITTER**
OPTISCHER SENDER
ÉMETTEUR OPTIQUE

(43) Date of publication of application: 02.01.2013
(73) Proprietor: Mitsubishi Electric Corporation, Chiyoda-ku Tokyo 100-8310 (JP)
(72) Inventor: HAYASHI, Shusaku, Tokyo 100-8310 (JP); SHIMAKURA, Yasuhisa, Tokyo 100-8310 (JP); SAWADA, Kazushige, Tokyo 100-8310 (JP)
(74) Representative: Sajda, Wolf E.
(86) International application number: PCT/JP2010/001135
(87) International publication number: WO 2011/101919

(56) References cited:
- EP-A1- 1 933 479
- EP-A2- 1 793 513
- DE-A1- 10 240 465
- JP-A- 10 336 154
- JP-A- 2008 172 714
- JP-A- 2009 027 517
- US-A1- 2006 263 095
- US-A1- 2008 170 864

## Description

### TECHNICAL FIELD

The present invention relates to an optical transmitter that includes, for example, a plurality of optical modulators and has a function of controlling phases of modulating signals of the plurality of optical modulators.

### BACKGROUND ART

Submarine optical cable transmission systems are mainly classified into a non-relay system applied to cross-strait connection etc. and a long-distance relay system including a submarine repeater for transoceanic connection. A relay transmission system using submarine optical cables requiring a long-distance relay method includes a transmission path of submarine relay and coast radio stations which are installed at both ends of the transmission path. In general, submarine repeaters are arranged at a relay span of about 50 km in the relay transmission system.

As a technique for effectively transmitting a plurality of information items using the optical cable, there is a technique of wavelength-division multiplexing optical transmission (WDM). In the technique of WDM, a plurality of signals are allocated to optical signals having different wavelengths (i.e. the plurality of signals are divided). Those signals are multiplexed and bidirectionally transmitted through two optical fibers.

A transmitting side in this technique multiplexes optical signals having different wavelengths from a light source by using an optical multiplexer. A receiving side in this technique branches the multiplexed signal into optical signals having different wavelengths by using an optical demultiplexer, and then converts the optical signals into electric signals through a light receiving device. This technique enables a small amount of cable resources to transmit a large amount of information.

In the transmitting side mentioned above, a plurality of optical transmitters generate transmission signals using laser beams having different wavelengths. A plurality of transmission signals generated by those optical transmitters are multiplexed by an optical wavelength multiplexer/demultiplexer and transmitted through the submarine optical cable. In the receiver side, the multiplexed signal is separated into optical signals by an optical wavelength multiplexer/demultiplexer, and then the separated signals are received by a plurality of optical receivers.

In the transmission system using the technique described above, a method of dense multiplexing by reducing wavelength intervals or a method of increasing bit rates of the optical transmitter and the optical receiver can be used to achieve high-capacity communication. Recently, wavelength multiplexing has been performed at an interval of 25 GHz (0.2 nm).

By the way, if the wavelength interval is reduced to achieve the dense multiplexing, intensity of transmission lights increases. For example, if allocating +10 dBm as intensity of transmission light and 64 as a number of multiplex to one optical transceiver, the total intensity of transmission lights reaches +28 dBm. However, if increasing the intensity of transmission lights to be input to an optical fiber, the nonlinear effect of the optical fiber appears remarkably and causes deterioration of transmission characteristics.

It is difficult to increase the total intensity of transmission lights. Therefore, it is necessary to reduce intensity of transmission lights per a wave, whereas signal-to-noise (S/N) ratio deteriorates by reducing the intensity of transmission. The deterioration of S/N ratio causes the deterioration of transmission characteristics.

In order to solve the above-mentioned problems, a method has been proposed, which improves reception sensitivity by using, for example, a differential phase shift keying (DPSK) modulation system (for example, see Patent Literature 1).

In this method, an optical transmitter reflects information in phase transitions of optical signals. An optical receiver in this method converts the phase transition into intensity transition by making the phase of optical signal interfere with a phase of preceding one symbol, and converts the intensity transition into electric signals through a twin photodiode (twin PD) to recognize the signal from the optical transmitter. Reception sensitivity can be theoretically improved by 3 dB, as compared to an on-off keying (OOK) which is a generally used as a modulation method.

In the modulation system, the optical transmitter generally includes a plurality of optical modulators, as described in Patent Literature 1. This is called a bit synchronization phase modulation system. This system is utilized for improving distortion of signal waveform by reducing a SPM-GVD effect which is a synergistic effect of self-phase modulation (SPM) and group velocity dispersion (GVD).

In the system mentioned above, it is necessary to match phases of modulating signals to be input to the plurality of optical modulators. The optical transmitter disclosed in Patent Literature 1 has a phase shifter capable of controlling phase of a modulating signal input to a light intensity modulator, mixes the modulating signal input to the optical phase modulator with the modulating signal input to the light intensity modulator by using a mixer, and then performs feedback control on the phase shifter to constantly maintain the relation between the phases of the two modulating signals. According to this method, it is possible to constantly match the phases of the modulating signals input to the two optical modulators.

Patent Literature 1 further discloses a method in which two optical modulators perform modulation to generate a transmission signal, the photodiode (PD) receives the transmission signal and converts the received signal into an electric signal, and the light intensity modulator extracts the modulated signal component.

According to this method, it is possible to compensate for a delay caused by optical fibers. Therefore, even when the length of the optical fiber varies or the length of the optical path varies depending on the temperature, it is possible to constantly match the phases of two modulating signals.

Patent Literature 2 discloses a method of matching the phases of a plurality of modulating signals with ease. The phase difference between a plurality of modulating signals is not constant, but varies depending on the temperature. The variation is caused by a change in the length of the optical path due to a change in the refractive index of the optical fiber through which an optical signal is transmitted or a change in the internal amount of delay of an IC according to the temperature.

Therefore, in the optical transmitter disclosed in Patent Literature 2, a temperature monitoring unit is provided and a phase shifter controls the amount of delay according to the temperature, thereby matching the phases of a plurality of modulating signals. In this method, the optical transmitter may include a phase shifter, a control unit that controls the phase shifter, and a temperature monitoring unit that monitors the temperature. In this case, it is possible to match the phases with ease.

Patent Literature 3 discloses an optical device performing phase modulation and an optical modulation method. The device and method include varying phases of two data signals at a first predetermined frequency, performing multi-level phase modulation of a light based on the two data signals whose phases are varied at the first predetermined frequency, extracting a component having the first predetermined frequency from an optical signal subjected to the phase modulation, and controlling the phases of the two data signals based on the component extracted from the optical signal.

Patent Literature 4 discloses an optical transmission apparatus capable of compensating for the delay deviation depending on the temperature variation between drive signals. The optical transmission apparatus comprises a plurality of optical modulating sections serially connected to each other via optical fibers, driving sections corresponding to the optical modulating sections, delay amount varying sections that provide variable delay amounts for modulating signals to be input to the driving sections, to adjust timing between drive signals to be provided for the optical modulating sections, temperature monitoring sections that monitor the temperature of each of the optical fibers and the like, and a delay amount control section that controls the delay amount in each of the delay amount varying sections based on the monitored temperatures.

Patent Literature 5 discloses a light modulating apparatus used in a transmission system using WDM (Wavelength Division Multiplexing). The light modulating apparatus which is to be used in a transmission system using wavelength division multiplexing has a signal generating section for producing a transmission signal and the like, a first light modulating section for modulating light emitted from a light source, on the basis of the transmission signal, a variable phase shifter which changes a phase of a light quantity control signal, a second light modulating section for modulating a light signal emitted from the first light modulating section, on the basis of an output of the variable phase shifter, a branching section for branching a light signal emitted from the second light modulating section, into an output light signal and an electric signal, and an analysis controlling section for sampling the electric signal, controlling the variable phase shifter on the basis of sampled data, and adjusting a timing of the modulation in the second light modulating section.

### RELATED ART DOCUMENT

Patent Literature 1: Japanese Patent No. 4024017
Patent Literature 2: Japanese Patent Application Laid-Open JP-A-2007-158 415
Patent Literature 3: US 2008/170864 A1
Patent Literature 4: EP 1 793 513 A2
Patent Literature 5: EP 1 933 479 A1

### SUMMARY OF THE INVENTION

As described above, the optical transmitter disclosed in Patent Literature 1 can perform the feedback control to compensate for a delay caused by optical fibers. However, it is necessary to branch the optical signal transmitted by the optical modulator and extract modulating signals from the branched signals by using a PD.

Therefore, it is needed to prepare many expensive components, such as a high-speed PD capable of receiving the frequency of the modulating signal input to the optical modulator and a high-speed mixer which processes the high-speed signal. Therefore, a mounting structure becomes complicated in order to process high-speed signals.

The optical transmitter disclosed in Patent Literature 2 can match the phases of the modulating signals input to a plurality of optical modulators with ease. However, if the length of the optical fiber between the plurality of optical modulators is changed, the amount of phase which varies depending on the temperature is also changed.

Therefore, for example, when the length of the optical fiber between the optical modulators is changed by reconnection after breaking of the optical fiber, it is necessary to measure the optimal amount of phase control according to the renewed length of the optical fiber every time. This results in an increase in the processing time. In addition, the optimal value is mere an approximate value obtained from the measurement result, and it causes a variation in the accuracy of compensating for a delay.

The present invention has been made to solve the above-mentioned problems. The object of the present invention is to provide an inexpensive optical transmitter capable of automatically matching the phases of modulating signals input to two optical modulators with a simple structure.

According to the invention, the problem is solved by means of an optical transmitter as defined in independent claims 1 or 4. Advantageous further developments of the optical transmitter according to the invention are set forth in the subclaims.

### BRIEF DESCRIPTION OF DRAWINGS

- FIG. 1: is a diagram illustrating the structure of an optical transmitter according to Embodiment 1 of the invention.
- FIG. 2: is a conceptual diagram illustrating an eye pattern when a light intensity modulator is used as a data modulating unit according to Embodiment 1 of the invention to perform phase modulation.
- FIG. 3: is a vector diagram illustrating an aspect of phase transition when the light intensity modulator is used as the data modulating unit according to Embodiment 1 of the invention.
- FIG. 4: is a conceptual diagram illustrating an eye pattern when an optical phase modulator is used as the data modulating unit according to Embodiment 1 of the invention to perform phase modulation.
- FIG. 5: is a vector diagram illustrating an aspect of phase transition when the optical phase modulator is used as the data modulating unit according to Embodiment 1 of the invention.
- FIG. 6: is a conceptual diagram of an eye pattern when a clock modulating unit according to Embodiment 1 of the invention performs RZ modulation.
- FIG. 7: is a conceptual diagram of an eye pattern when the clock modulating unit according to Embodiment 1 of the invention performs CSRZ modulation.
- FIG. 8(a) to FIG:8(c): are conceptual diagrams illustrating an eye pattern when the phases of modulating signals are matched with each other and the data modulating unit and the clock modulating unit perform modulation in Embodiment 1 of the invention.
- FIG. 9(a) to FIG. 9(c): are conceptual diagrams illustrating an eye pattern when the phases of the modulating signals are not matched with each other and the data modulating unit and the clock modulating unit perform modulation in Embodiment 1 of the invention.
- FIG. 10: is a flowchart illustrating the operation of the optical transmitter according to Embodiment 1 of the invention.
- FIG. 11: is a conceptual diagram illustrating the relation between the phase difference between the modulating signals and the intensity of an optical signal output from the optical transmitter according to Embodiment 1 of the invention.
- FIG. 12: is a conceptual diagram illustrating an eye pattern when the optical transmitter according to Embodiment 1 of the invention performs OOK modulation.
- FIG. 13: is a conceptual diagram illustrating an eye pattern when the optical transmitter according to Embodiment 1 of the invention performs RZ-OOK modulation.
- FIG. 14: is a diagram illustrating another structure of the optical transmitter according to Embodiment 1 of the invention.
- FIG. 15: is a diagram illustrating the structure of an optical transmitter according to Embodiment 2 of the invention.
- FIG. 16: is a flowchart illustrating the operation of the optical transmitter according to Embodiment 2 of the invention.
- FIG. 17: is a conceptual diagram illustrating the relation between an applied dither signal and an output dither signal when the amount of phase control deviates from the optimal value in Embodiment 2 of the invention.
- FIG. 18: is a conceptual diagram illustrating the relation between the applied dither signal and the output dither signal when the amount of phase control is the optimal value in Embodiment 2 of the invention.
- FIG. 19(a) to FIG. 19(c): are conceptual diagrams illustrating the relation between the amount of phase control and an error signal in Embodiment 2 of the invention.
- FIG. 20: is a diagram illustrating the structure of an optical transmitter according to Embodiment 3 of the invention.
- FIG. 21: is a flowchart illustrating the operation of the optical transmitter according to Embodiment 3 of the invention.
- FIG. 22: is a diagram illustrating another structure of the optical transmitter according to Embodiment 3 of the invention.
- FIG. 23: is a diagram illustrating the structure of an optical transmitter according to Embodiment 4 of the invention.
- FIG. 24: is a diagram illustrating another structure of the optical transmitter according to Embodiment 4 of the invention.

### DESCRIPTION OF EMBODIMENTS

Hereinafter, exemplary embodiments of the invention will be described in detail with reference to the accompanying drawings.

### Embodiment 1.

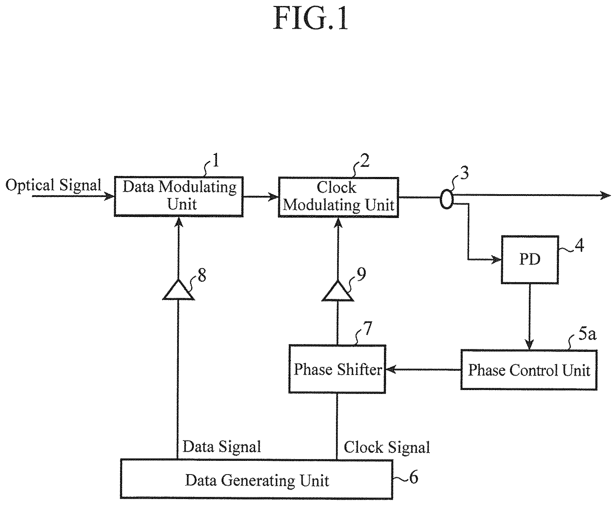

FIG. 1 is a diagram illustrating the structure of an optical transmitter according to Embodiment 1 of the invention. The optical transmitter has a structure which can be applied to an optical transmitter using a plurality of optical modulators. FIG. 1 illustrates an example of the structure in which a return-to-zero differential phase shift keying (RZ-DPSK) modulation system is applied.

As illustrated in FIG. 1, the optical transmitter includes a data modulating unit (optical modulator) 1, a clock modulating unit (optical modulator) 2, an optical coupler 3, a photodiode (PD) 4, a phase control unit 5a, a data generating unit 6, a phase shifter 7, and first and second drivers 8 and 9.

The data modulating unit 1 modulates a phase of the optical signal input from a light source (not illustrated) in accordance with a data signal input from the data generating unit 6 through the first driver 8. The optical signal whose phase is modulated by the data modulating unit 1 is output to the clock modulating unit 2.

The clock modulating unit 2 modulates an intensity of the optical signal, to which the phase modulation has been implemented by the data modulating unit 1, in accordance with a clock signal input from the data generating unit 6 through the phase shifter 7 and the second driver 9. The optical signal whose intensity is modulated by the clock modulating unit 2 is output to the optical coupler 3.

The optical coupler 3 branches the optical signal, to which the intensity modulation has been implemented by the clock modulating unit 2, into two optical signals. One of the branched signals is multiplexed with a plurality of optical signals having a different wavelength by an optical wavelength multiplexer/demultiplexer (not illustrated), and then transmitted to a receiver. The other optical signal of the branched signals is output to the PD 4.

The PD 4 detects the optical signal branched by the optical coupler 3 and converts the optical signal into an electric signal. The electric signal converted by the PD 4 is output to the phase control unit 5a.

In many cases, a general optical modulator has equivalent functions to the optical coupler 3 and the PD 4. In that case, the functions of the optical coupler 3 and the PD 4 in the optical modulator may be used.

The phase control unit 5a performs feedback control on the amount of phase control of the phase shifter 7 through a hill-climbing method on a basis of the electric signal converted by the PD 4 to maximize the intensity of this electric signal.

The data generating unit 6 generates a data signal and a clock signal. The data signal generated by the data generating unit 6 is output to the first driver 8, and the clock signal is output to the phase shifter 7.

The phase shifter 7 controls a phase of the clock signal generated by the data generating unit 6 in accordance with the amount of phase control fed by the phase control unit 5a. The clock signal whose phase is controlled by the phase shifter 7 is output to the second driver 9.

The first driver 8 performs an optical amplification to the data signal generated by the data generating unit 6. The data signal amplified by the first driver 8 is output to the data modulating unit 1.

The second driver 9 performs an optical amplification to the clock signal whose phase is controlled by the phase shifter 7. The clock signal amplified by the second driver 9 is output to the clock modulating unit 2.

The phase modulation of the optical signal by the data modulating unit 1 will be described.

In the data modulating unit 1, a light intensity modulator is used as the optical modulator, or an optical phase modulator is used as the optical modulator.

First, the case in which the light intensity modulator is used in the data modulating unit 1 will be described.

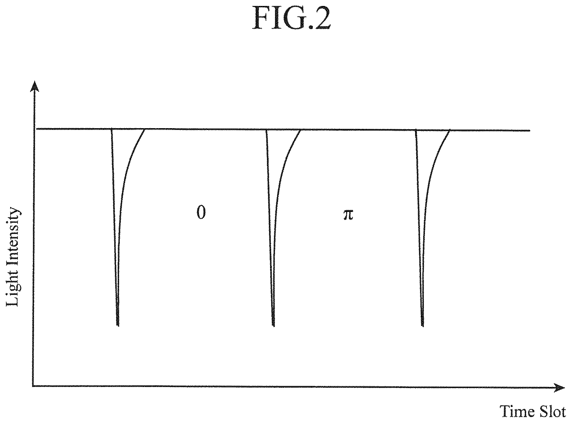

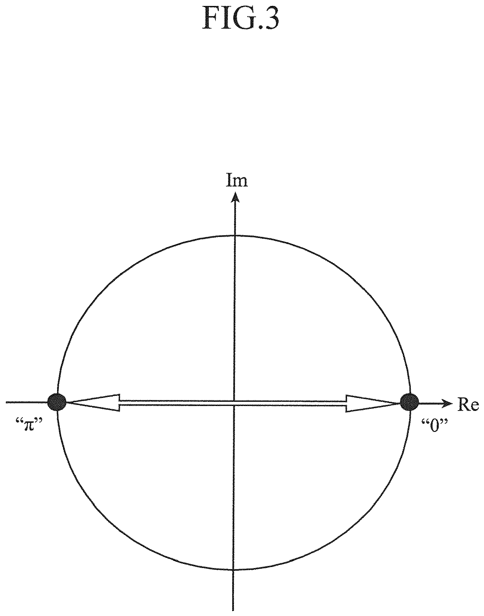

FIG. 2 is a conceptual diagram illustrating an eye pattern corresponding to the condition that the light intensity modulator is used in the data modulating unit 1 according to Embodiment 1 and modulates the phase of the optical signal. FIG. 3 is a vector diagram illustrating an aspect of phase transition corresponding to the condition that the light intensity modulator is used in the data modulating unit 1 according to Embodiment 1.

As illustrated FIG. 2, when the light intensity modulator is used in the data modulating unit 1, a driving voltage that is two times more than a driving voltage (Vπ) required for intensity modulation is applied to allocate values 0 and 1 of the data signal to phases 0 and π of light. In this case, as illustrated in FIG. 3, there is a moment when the amplitude becomes zero during the phase transition between 0 and π.

Therefore, as shown in the eye pattern in FIG. 2, a light extinction occurs during the phase transition between 0 and π, and then light emission occurs again. The shape of the eye pattern greatly depends on a waveform of the data signal input to the data modulating unit 1. If the waveform indicates an ideal rectangular wave, light extinction hardly occurs, and light emission is maintained almost constantly. If the rising time and the falling time of the data signal are delayed, the transition from the light-emitting state to the extinction state and the transition from the extinction state to the light-emitting state are delayed. Therefore, as illustrated in FIG. 2, the extinction state in the eye pattern is maintained for a long time.

Second, the case in which the optical phase modulator is used in the data modulating unit 1 will be described.

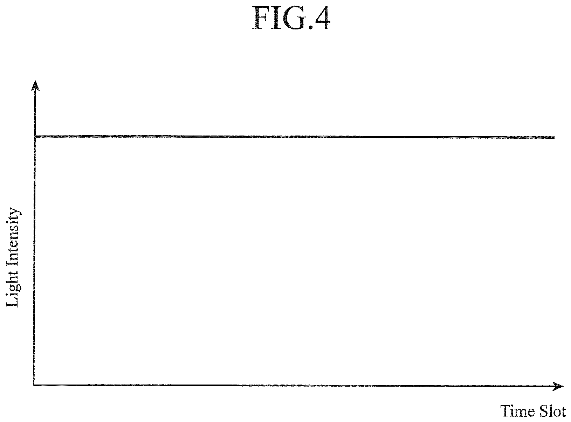

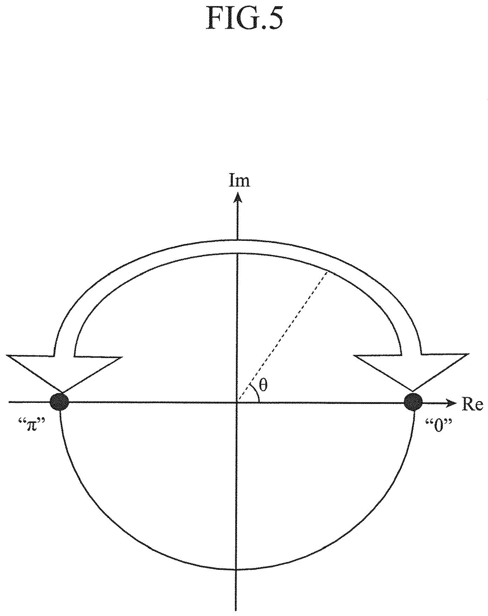

FIG. 4 is a conceptual diagram illustrating an eye pattern corresponding to the condition that the optical phase modulator is used in the data modulating unit 1 according to Embodiment 1 and modulates the phase of the optical signal. FIG. 5 is a vector diagram illustrating an aspect of phase transition corresponding to the condition that the optical phase modulator is used in the data modulating unit 1 according to Embodiment 1.

As illustrated in FIG. 4, when the optical phase modulator is used in the data modulating unit 1, it can directly modulate the phase of the optical signal. Therefore, a voltage Yπ required for driving is applied to allocate the values 0 and 1 of the data signal to the phases 0 and π of light. In this case, as illustrated in FIG. 5, the amplitude is maintained constant during the phase transition between 0 and π.

Therefore, there is no extinction state as shown in the eye pattern in FIG. 4, and the light-emitting state is constantly maintained during the phase transition between 0 and π. The shape of this eye pattern does not depend on the waveform of an input data signal.

As described above, the two types of optical modulators can be utilized for modulation of the phase of optical signals, however, the light intensity modulator is utilized in many cases. The reason is as follows. In using the optical phase modulator, the phase transition between 0 and π appears along the arc of vector diagram, as discussed above. During this phase transition, the amount of the phase modulation other than 0 and π is generated. Therefore, if the rising time and the falling time are delayed, a bright line spectrum is generated at a transmission rate cycle, and then a deterioration of waveform occurs in adjacent bits where phase transition occurs.

On the other hand, in using the light intensity modulator, there is no phase components other than 0 and π. Therefore, the bright line spectrum is not generated, and the received waveform does not deteriorate. In the present invention, it is assumed that the light intensity modulator is used in the data modulating unit 1.

The intensity modulation of the optical signal by the clock modulating unit 2 will be described.

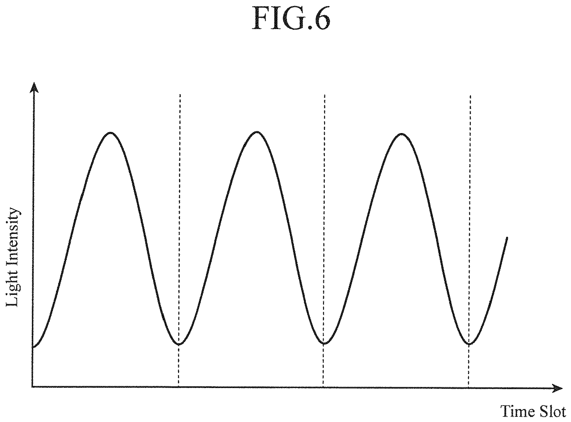

FIG. 6 is a conceptual diagram illustrating an eye pattern corresponding to the condition that the clock modulating unit 2 according to Embodiment 1 performs return-to-zero (RZ) modulation on the optical signal. FIG. 6 illustrates a waveform corresponding to the condition that a driving voltage is Vπ and a signal having the same frequency as the data signal is applied.

The clock modulating unit 2 modulates the intensity of the optical signal using the light intensity modulator. As illustrated in FIG. 6, since the clock modulating unit 2 performs intensity modulation on the basis of the clock signal, the optical signal is repeated between the light-emitting state and the extinction state.

The clock modulation by the clock modulating unit 2 is so-called RZ-wise. According to the RZ-wise by RZ modulation, one extinction state (Zero) occurs between bits in the optical signal whose phase is modulated to 0 and π by the data modulating unit 1, and then the signal quality is improved.

The clock modulating unit 2 can use a driving voltage of 2Vπ and apply a signal with a frequency that is half the frequency of the data signal, thereby performing a modulation called carrier-suppressed return-to-zero (CSRZ) modulation.

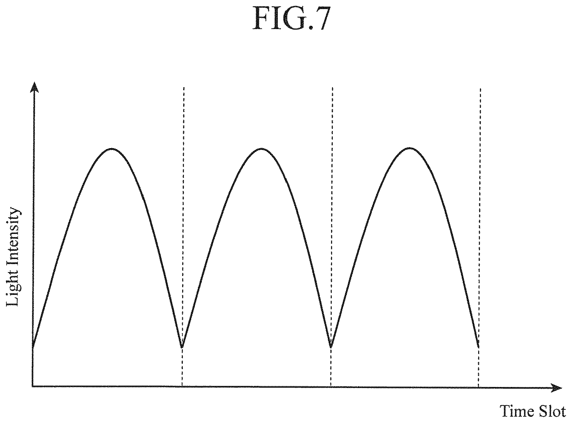

FIG. 7 is a conceptual diagram illustrating an eye pattern corresponding to the condition that the clock modulating unit 2 according to Embodiment 1 performs CSRZ modulation on the optical signal.

Since the phases 0 and π are constantly inverted by applying the driving voltage of 2Vπ, a carrier component can be suppressed. As illustrated in FIG. 7, in the eye pattern obtained by CSRZ modulation, the duty ratio is higher than that in the eye pattern obtained by RZ modulation.

The phase matching between the data signal and the clock signal will be described.

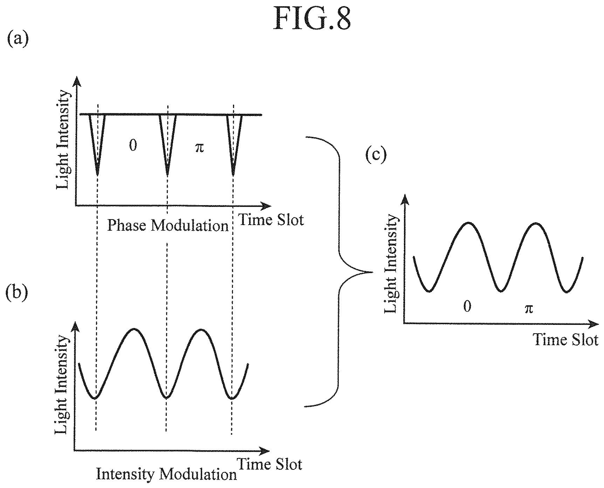

FIGs. 8(a) to 8(c) are conceptual diagrams illustrating an eye pattern corresponding to the condition that the phases of the modulating signals are matched with each other and the data modulating unit 1 and the clock modulating unit 2 perform modulation according to Embodiment 1.

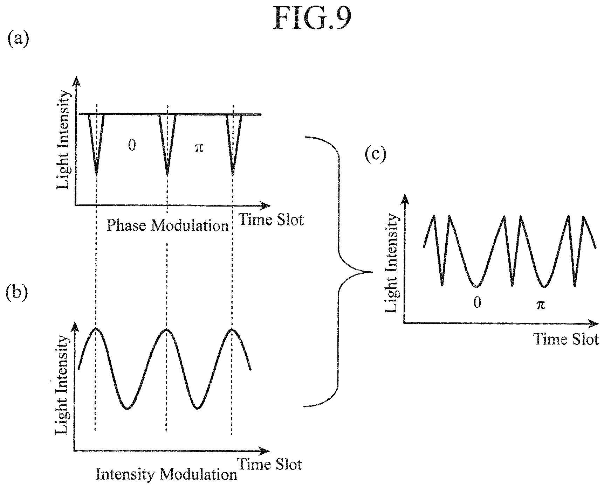

FIGs. 9(a) to 9(c) are conceptual diagrams illustrating an eye pattern corresponding to the condition that the phases of the modulating signals are not matched with each other and the data modulating unit 1 and the clock modulating unit 2 perform modulation according to Embodiment 1.

In the optical transmitter, the optical signal modulated by the data modulating unit 1 and the clock modulating unit 2 is output as a transmission signal. In this case, it is very important to match the phases of the data signal and the clock signal.

When the phases of the data signal and the clock signal are matched with each other, the data modulating unit 1 performs phase modulation illustrated in FIG. 8(a) on the optical signal and the clock modulating unit 2 performs intensity modulation illustrated in FIG. 8(b) on the optical signal. In this way, it is possible to obtain the waveform illustrated in FIG. 8(c).

On the other hand, if the phases of the data signal and the clock signal are not matched with each other, when the data modulating unit 1 performs phase modulation illustrated in FIG. 9(a) on the optical signal and the clock modulating unit 2 performs intensity modulation illustrated in FIG. 9(b), the signal is in the extinction state at the points 0 and π and is in the light-emitting state during the phase transition from 0 to π or during phase transition from π to 0.

Therefore, as illustrated in FIG. 9(c), a data part is in the extinction state and a correct waveform is not obtained. Even if this signal is output to the optical receiver, it is difficult to demodulate the input signal.

In the optical transmitter illustrated in FIG. 1, in order to match phases of the data signal and the clock signal, the phase shifter 7 is provided between the data generating unit 6 and the second driver 9 and controls the phase of the clock signal to match the phases of two modulating signals. The phase matching between two modulating signals is not limited to the above-mentioned example. The phase of the data signal may be controlled, or the phases of both the data signal and the clock signal may be controlled for phase matching.

The operation of the optical transmitter having the above-mentioned structure will be described.

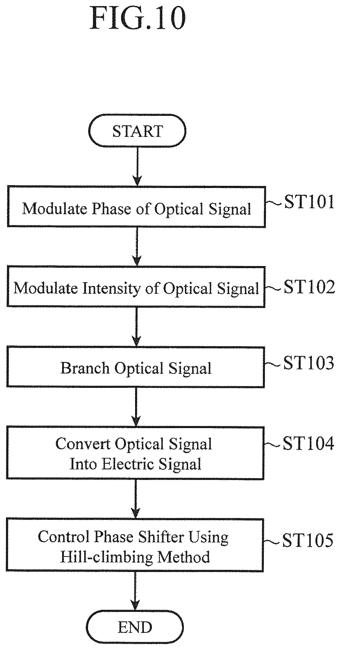

FIG. 10 is a flowchart illustrating the operation of the optical transmitter according to Embodiment 1 of the invention.

In the operation of the optical transmitter, as illustrated in FIG. 10, first, the data modulating unit 1 modulates the phase of the optical signal input from a light source (not illustrated) on the basis of the data signal input from the data generating unit 6 through the first driver 8 (Step ST101). The optical signal whose phase is modulated by the data modulating unit 1 is output to the clock modulating unit 2.

The clock modulating unit 2 modulates the intensity of the optical signal from the data modulating unit 1 in accordance with the clock signal input from the data generating unit 6 through the phase shifter 7 and the second driver 9 (Step ST102). The optical signal whose intensity is modulated by the clock modulating unit 2 is output to the optical coupler 3.

The optical coupler 3 branches the optical signal from the clock modulating unit 2 into two optical signals (Step ST103). One of the two optical signals branched by the optical coupler 3 is output to an optical wavelength multiplexer/demultiplexer (not illustrated), is multiplexed with a plurality of optical signals with a different wavelength, and is then transmitted to the receiver side. The other optical signal branched by the optical coupler 3 is output to the PD 4.

The PD 4 detects the optical signal branched by the optical coupler 3 and converts the detected signal into an electric signal (Step ST104). The electric signal converted by the PD 4 is output to the phase control unit 5a.

The phase control unit 5a controls the amount of phase control of the phase shifter 7 through the hill-climbing method in accordance with the electric signal converted by the PD 4 to maximize the intensity of the signal (Step ST105).

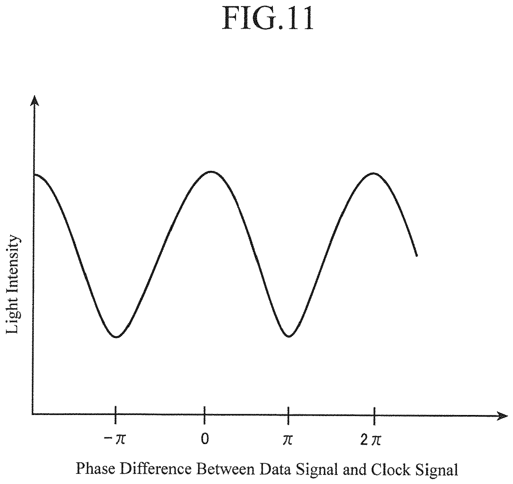

FIG. 11 is a conceptual diagram illustrating the relation between the phase difference between the data signal and the clock signal and the intensity (which is equal to the intensity of the signal output from the PD 4) of the optical signal output from the optical transmitter. FIG. 11 shows a transition of light intensity with respect to a phase shift when assuming that the phase difference of zero indicates the state of matching phases.

As illustrated in FIG. 11, the intensity of the optical signal indicates the maximum when the phases of two modulating signals are matched with each other (the intensity of the signal from the PD 4 is maximized), and is gradually reduced as the amount of phase shift increases.

Therefore, the phase control unit 5a is enabled to match the phases of two modulating signals by controlling the intensity of the signal from the PD 4 to be maximized through the hill-climbing method to control the amount of phase control of the phase shifter 7.

More specifically, if assuming that a phase of the clock signal in the early stages is called as A, the phase control unit 5a measures the intensity of signal from the PD 4 in respect to the phase A. The phase control unit 5a controls the phase shifter 7 to acquire both a phase A+α and a phase A-α shifted from the phase A by using an optional amount of phase control α, and then measures the intensity of the signals at the above-mentioned three points in respect to the phases A, A+α and A-α.

After that, the phase control unit 5a recognizes a phase B as the phase where the intensity of the signal is maximized among the phases A, A+α and A-α, and repeatedly performs the measurement for the phases B, B+α and B-α to control the control the intensity of the signal to be maximized.

The hill-climbing method is not limited to the above-mentioned control method. For example, the following control method is considered. The intensities of the two signals of the phase A and the phase A+α are compared with each other, and the signal having higher intensity is determined.

When the intensity of the signal with the phase A is higher, the intensities of the signals of the phase A and the phase A-α can be compared with each other. When the intensity of the signal with the phase A+α is higher, the intensities of the signals of the phase A+α and the phase A+2α can be compared with each other.

As described above, according to Embodiment 1, the intensity of the signal from the PD 4 corresponding to the optical intensity of the optical signal from the optical transmitter is detected, and the amount of phase control of the phase shifter 7 is controlled through the hill-climbing method to maximize the intensity of the signal from the PD 4. Therefore, it is possible to match the phases of two modulating signals.

In the optical transmitter according to Embodiment 1, the RZ-DPSK modulation system is applied. However, the modulation system is not limited thereto. For example, the optical transmitter can also be applied to a RZ-OOK modulation system.

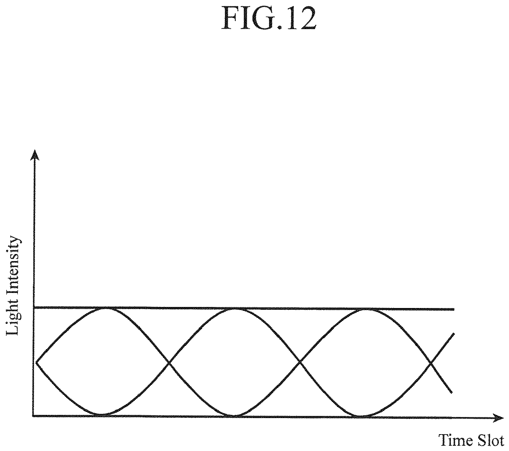

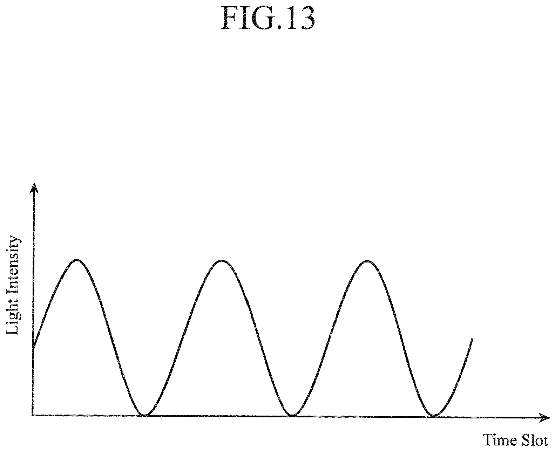

FIG. 12 is a conceptual diagram illustrating an eye pattern corresponding to the condition that the optical transmitter according to Embodiment 1 performs OOK modulation. FIG. 13 is a conceptual diagram illustrating an eye pattern corresponding to the condition that the optical transmitter according to Embodiment 1 performs RZ-OOK modulation.

In the optical transmitter to which the RZ-OOK modulation system is applied, similarly to the structure of the optical transmitter illustrated in FIG. 1, two optical modulators are used, one of the optical modulators performs OOK modulation, and the other optical modulator performs RZ modulation. In general, the waveform of the optical signal output by the optical transmitter to which the RZ-OOK modulation system is applied is called a non-return-to-zero (NRZ) waveform.

The optical transmitter of RZ-OOK modulation system is able to acquire the waveform illustrated in FIG. 13 by implementing RZ modulation illustrated in FIG. 6 on the optical signal input from a light source (not illustrated) after implementing OOK modulation illustrated in FIG. 12 on the optical signal. The invention can also be applied to this type of modulation system.

In the optical transmitter according to Embodiment 1, two optical modulators are connected in series to each other, however, the number of optical modulators is not limited to two. The invention can be applied to an optical transmitter in which three or more optical modulators are connected in series to each other. In FIG. 1, the phase shifter 7 which controls the phase of the modulating signal is used.

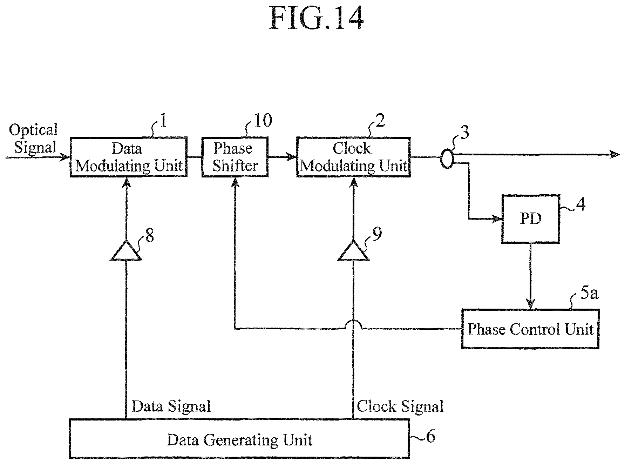

However, as illustrated in FIG. 14, a phase shifter 10 may be used, which controls the phase of at least one of the optical signals input to the optical modulators 1 and 2. In this case, various types of optical phase shifters or optical delay lines may be used as the phase shifter 10.

### Embodiment 2.

In Embodiment 1 disclosed in above, the phase shifter 7 is controlled through the hill-climbing method. By using this method, it is possible to easily control the phase to the optimal phase. However, when a width of search points (i.e. α in Embodiment 1) is narrowed, the number of measurement points increases, and the control time for searching the optimal point increases in proportion to the number of measurement points.

In contrast, since the accuracy of the optimal point is reduced when the step width is widened, it is difficult to excessively widen the step width. Embodiment 2 discloses a structure which controls the phase shifter 7 by using synchronous detection, not the hill-climbing method, to significantly reduce the control time.

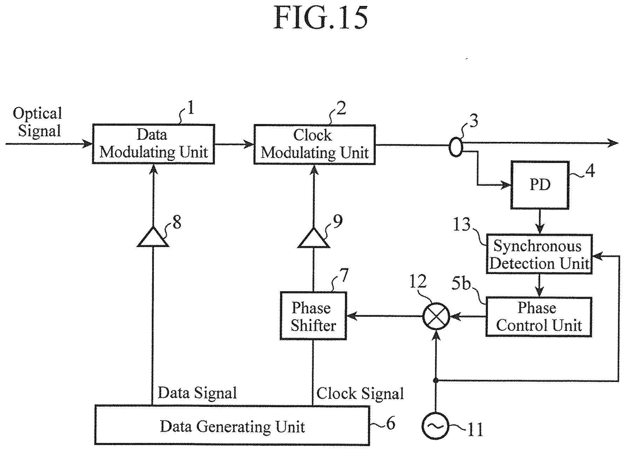

FIG. 15 is a diagram illustrating the structure of an optical transmitter according to Embodiment 2 of the invention. The optical transmitter illustrated in FIG. 15 differs from the optical transmitter according to Embodiment 1 in FIG. 1 in that, a minute signal generating unit 11, a mixer 12, and a synchronous detection unit 13 are added, and the phase control unit 5a is switched to a phase control unit 5b. The other structures are the same as those in Embodiment 1, and are denoted by the same reference numerals. Therefore, the description thereof will not be repeated.

The minute signal generating unit 11 generates a low-frequency minute signal (a dither signal). The term of "low frequency" used in the disclosure means a frequency which does not have a great influence on a data signal as well as which can be synchronously detected. The dither signal generated by the minute signal generating unit 11 is output to both the mixer 12 and the synchronous detection unit 13.

The mixer 12 superimposes the dither signal generated by the minute signal generating unit 11 on a signal indicating the amount of phase control from the phase control unit 5b. The signal which indicates the amount of phase control and has the dither signal superimposed thereon by the mixer 12 is output to the phase shifter 7.

The synchronous detection unit 13 performs a synchronous detection on both the dither signal included in the electric signal converted by the PD 4 and the dither signal generated by the minute signal generating unit 11, thereby generating an error signal. The error signal generated by the synchronous detection unit 13 is output to the phase control unit 5b.

The phase control unit 5b performs a feedback control on the amount of phase control of the phase shifter 7 to minimize the error signal generated by the synchronous detection unit 13.

The operation of the optical transmitter having the above-mentioned structure will be described.

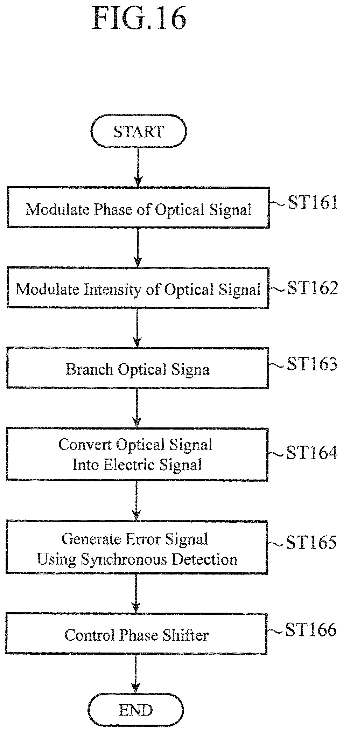

FIG. 16 is a flowchart illustrating the operations of the optical transmitter according to Embodiment 2 of the invention. In the operations of the optical transmitter in FIG. 16, the same operations as those of the optical transmitter according to Embodiment 1 illustrated in FIG. 10 will be described in brief.

As showm in FIG. 16, in the operation of the optical transmitter, the optical signal modulated by the clock modulating unit 2 through the data modulating unit 1 is branched by the optical coupler 3, and is then converted into an electric signal by the PD 4 (Steps ST161 to ST164).

The phase shifter 7 controls the phase of the clock signal on the basis of the dither signal generated by the minute signal generating unit 11 in addition to the amount of phase control (e.g. a voltage) from the phase control unit 5b. Therefore, the dither signal appears even in the electric signal converted by the PD 4.

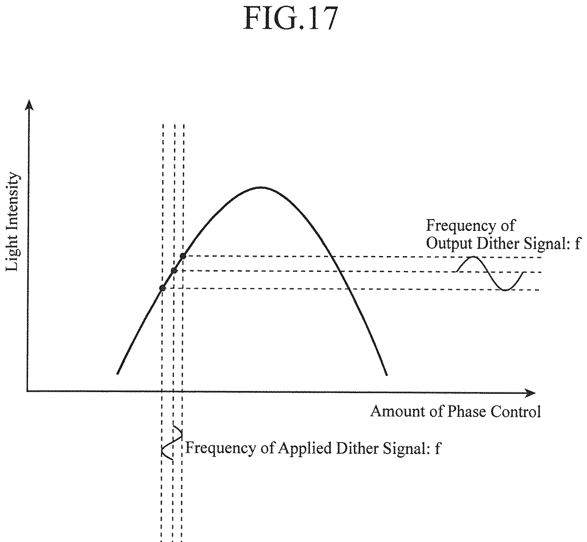

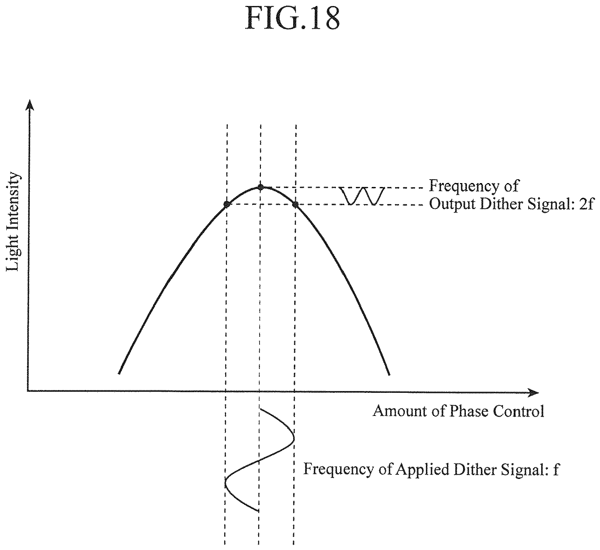

FIG. 17 is a conceptual diagram illustrating the relation between an applied dither signal and an output dither signal when the amount of phase control deviates from the optimal value in Embodiment 2. FIG. 18 is a conceptual diagram illustrating the relation between an applied dither signal and an output dither signal when the amount of phase control indicates the optimal value in Embodiment 2.

As illustrated in FIG. 17 in which the amount of phase control by the phase control unit 5b deviates from the optimal value, when the frequency of the dither signal which is generated and applied by the minute signal generating unit 11 is assumed as "f", the frequency of the dither signal output from the PD 4 is also "f'.

On the other hand, as illustrated in FIG. 18 in which the amount of phase control by the phase control unit 5b is the optimal value, when the frequency of the dither signal which is generated and applied by the minute signal generating unit 11 is assumed as "f', the frequency of the dither signal output from the PD 4 is "2f".

The electric signal which is converted by the PD 4 and includes the dither signal is output to the synchronous detection unit 13.

The synchronous detection unit 13 performs the synchronous detection on both the dither signal generated by the minute signal generating unit 11 and the dither signal included in the electric signal converted by the PD 4, thereby generating the error signal (Step ST165). The error signal generated by the synchronous detection unit 13 is output to the phase control unit 5b.

The phase control unit 5b controls the amount of phase control of the phase shifter 7 on the basis of the error signal from the synchronous detection unit 13 to minimize this error signal (Step ST166).

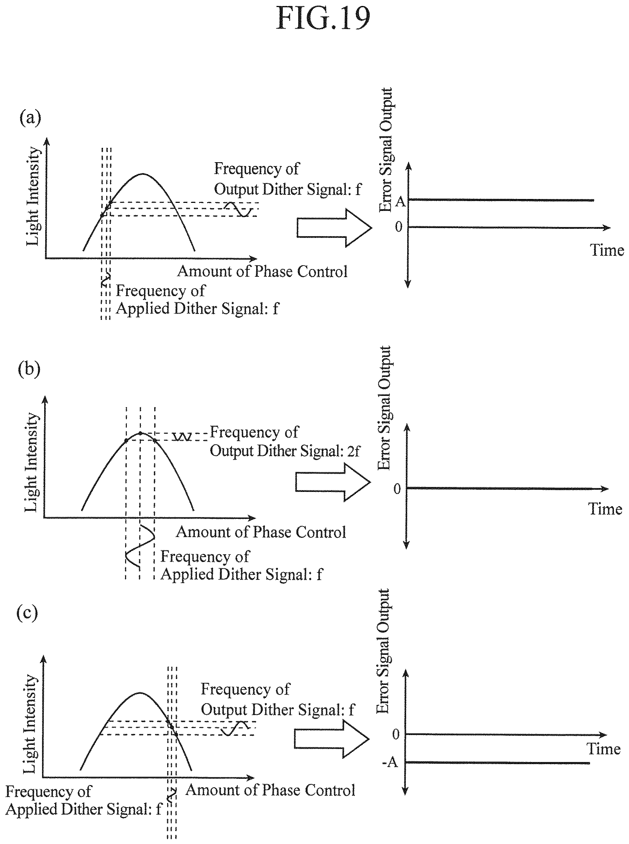

FIGs. 19(a) to 19(c) are conceptual diagrams illustrating the relation between the amount of phase control and the error signal in Embodiment 2.

As illustrated in FIG. 19(a), when the amount of phase control is less than the optimal value, the error signal indicates a positive value. As illustrated in FIG. 19(c), when the amount of phase control is more than the optimal value, the error signal indicates a negative value. Therefore, as illustrated in FIG. 19(b), the phase control unit 5b controls the amount of phase control by using the value and the polarity of the error signal to let the error signal indicate zero.

As described above, according to Embodiment 2, the synchronous detection is performed by using the applied dither signal and the dither signal output from the PD 4 to generate the error signal and the amount of phase control of the phase shifter 7 is controlled such that the error signal is minimized. In this manner, it is possible to accurately match the phases of two modulating signals at a high speed.

In the optical transmitter according to Embodiment 2, although two optical modulators are connected in series to each other, the number of optical modulators is not limited to two. The invention can also be applied to an optical transmitter in which three or more optical modulators are connected in series to each other.

In FIG. 15, the phase shifter 7 which controls the phase of the modulating signal is used. However, a phase shifter 10 may be used which controls the phase of at least one of the optical signals input to the optical modulators 1 and 2.

### Embodiment 3.

In Embodiment 1 disclosed in above, the phase control unit 5a constantly controls the phase shifter 7. However, in this case, the waveform fluctuates constantly on the time axis, which is called jitter or wander, and the waveform fluctuation causes the deterioration of reception characteristics. The amount of phase difference between two modulating signals is distinguished as an initial amount or a variation amount.

The variation amount is caused by a change in the length of an optical path due to a change in the refractive index of an optical fiber, or by a change in the internal amount of delay of an IC in accordance with temperature. Therefore, when the temperature does not vary, only a few variation are detected. In this regard, Embodiment 3 includes an additional function of determining the start and stop of control in accordance with temperature.

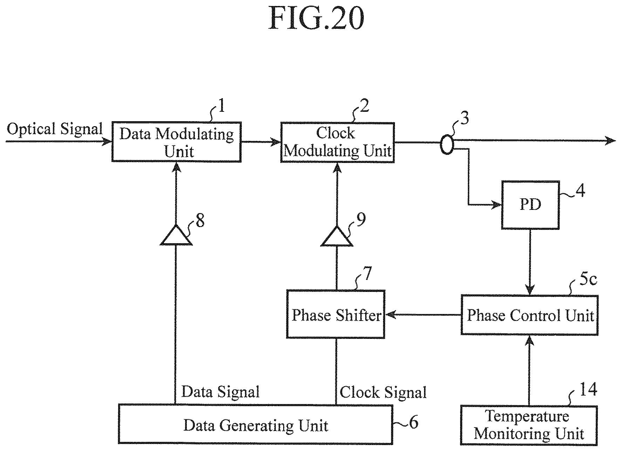

FIG. 20 is a diagram illustrating the structure of an optical transmitter according to Embodiment 3 of the invention. The optical transmitter in FIG. 20 differs from the optical transmitter according to Embodiment 1 in FIG. 1 in that, a temperature monitoring unit 14 is added, and the phase control unit 5a is replaced with a phase control unit 5c. The other structures are the same as those in Embodiment 1 and are denoted by the same reference numerals. Therefore, the description thereof will not be repeated.

The temperature monitoring unit 14 detects temperature of the optical fiber transmitting an optical signal. The temperature of the optical fiber detected by the temperature monitoring unit 14 is output to the phase control unit 5c.

The phase control unit 5c has a function of controlling the phase shifter 7 according to the temperature of the optical fiber detected by the temperature monitoring unit 14, in addition to the function of the phase control unit 5a taught in Embodiment 1. When the amount of phase control reaches the optimal value, the phase control unit 5c stops the control of the phase shifter 7, keeps outputting the optimal amount of phase control, and stores the temperature of the optical fiber detected by the temperature monitoring unit 14 at that time.

After that, the phase control unit 5c monitors the temperature of the optical fiber detected by the temperature monitoring unit 14. When the difference between the monitored temperature and the stored temperature is equal to or more than a predetermined value on the basis of the stored temperature, the phase control unit 5c resumes the control of the phase shifter 7.

The operation of the optical transmitter having the above-mentioned structure will be described.

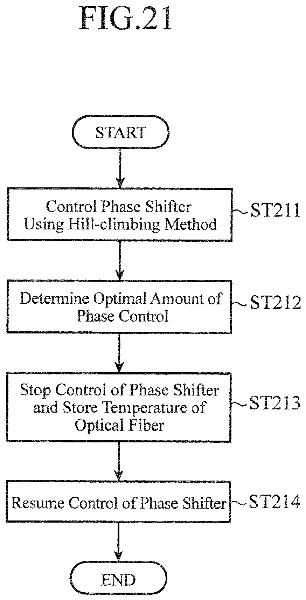

FIG. 21 is a flowchart illustrating the operation of the optical transmitter according to Embodiment 3 of the invention.

As shown in FIG. 21, when starting the control of the optical transmitter, similarly to the optical transmitter according to Embodiment 1, the phase control unit 5c controls the amount of phase control of the phase shifter 7 through the hill-climbing method to match the phases of two modulating signals with each other (Step ST211).

When the intensity of the signal from the PD 4 exceeds a predetermined threshold value, the phase control unit 5c determines that the amount of phase control reaches the optimal value (Step ST212). The threshold value is not limited to signal intensity, but may use a difference between the intensities of the signals in the amounts of phase control of two points.

In addition, the following method may be used, instead of using the threshold value. The intensities of the signals in the amounts of phase control of three points are measured and it is determined that the amount of phase control reached the optimal value when the medium value is the largest among the measured values.

The phase control unit 5c stops the control of the phase shifter 7, keeps outputting the optimal amount of phase control, and stores the temperature of the optical fiber detected by the temperature monitoring unit 14 (Step ST213). In this manner, the control on the phase shifter 7 is stopped when the optimal amount of phase control is obtained. Therefore, there is no influence on jitter characteristics.

The phase control unit 5c compares the temperature of the optical fiber detected by the temperature monitoring unit 14 with the stored temperature, and resumes the control of the phase shifter 7 when the difference between the temperatures is equal to or more than a predetermined value (Step ST214).

When the phase control unit 5c starts the control operation, the jitter characteristics deteriorate. However, there is no influence on the jitter characteristics, because the amount of phase control immediately reaches the optimal value and then the control of the phase shifter 7 is stopped.

The optical transmitter according to Embodiment 3 can also be applied to the optical transmitter according to Embodiment 2 which performs the synchronous detection to control the phase shifter 7.

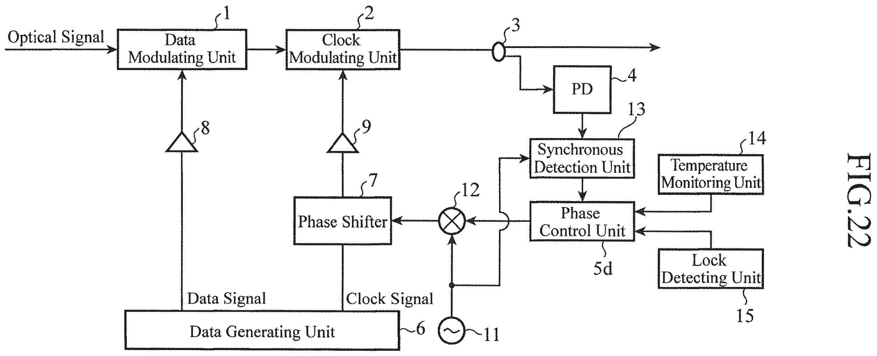

FIG. 22 is a diagram illustrating another structure of the optical transmitter according to Embodiment 3 of the invention. The optical transmitter in FIG. 22 differs from the optical transmitter according to Embodiment 2 in FIG. 15 in that, a temperature monitoring unit 14 and a lock detecting unit 15 are added, and the phase control unit 5b is replaced with a phase control unit 5d. The other structures are the same as those in Embodiment 2 and are denoted by the same reference numerals. Therefore, the description thereof will not be repeated.

The lock detecting unit 15 determines that a control loop is locked when the error signal generated by the synchronous detection unit 13 is equal to or less than a predetermined threshold value. The lock detecting unit 15 outputs a lock signal which indicates that the phase control unit 5d is instructed to stop the control of the phase shifter 7.

The phase control unit 5d has a function of controlling the phase shifter 7 in accordance with both the temperature of the optical fiber detected by the temperature monitoring unit 14 and the presence or absence of the lock signal from the lock detecting unit 15, in addition to the function of the phase control unit 5b taught in Embodiment 2. When the lock signal is input from the lock detecting unit 15, the phase control unit 5d stops the control of the phase shifter 7 and keeps outputting the optimal amount of phase control.

The other processes are the same as described above and the description thereof will not be repeated.

As described above, according to Embodiment 3, when the amount of phase control reaches the optimal value, the control of the phase shifter 7 is stopped. And when the temperature of the optical fiber varies, the control of the phase shifter 7 is resumed. Therefore, the control of the phase shifter 7 is not performed while the amount of phase control indicates the optimal value and the temperature of the optical fiber is stabilized. As a result, it is possible to match the phases of two modulating signals without any influence on jitter characteristics.

### Embodiment 4.

In Embodiment 3 disclosed in above, the control of the phase shifter 7 is not performed while the amount of phase control reaches the optimal value and the temperature of the optical fiber is stabilized. When the temperature of the optical fiber is changed, the control of the phase shifter 7 is resumed. In this manner, the jitter characteristics are improved in Embodiment 3. In contrast, in Embodiment 4, in addition to the above-mentioned control operation, the following control is performed.

The optimal amount of phase control and the temperature when the amount of phase control reaches this optimal value are stored. When the control of the phase shifter 7 is resumed, the stored amount of phase control is read, without using the hill-climbing method or synchronous detection at the stored temperature, thereby matching the phases of two modulating signals.

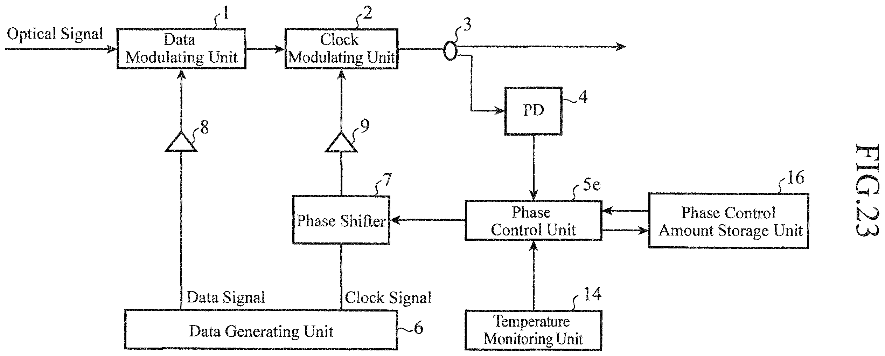

FIG. 23 is a diagram illustrating the structure of the optical transmitter according to Embodiment 4 of the invention. The optical transmitter in FIG. 23 differs from the optical transmitter according to Embodiment 3 in FIG. 20 in that, a phase control amount storage unit 16 is added, and the phase control unit 5c is replaced with a phase control unit 5e. The other structures are the same as those in Embodiment 3 and are denoted by the same reference numerals. Therefore, the description thereof will not be repeated.

When the phase control unit 5e determines that the amount of phase control reaches the optimal value, the phase control amount storage unit 16 stores the amount of phase control and the temperature of the optical fiber detected by the temperature monitoring unit 14 at that time.

The phase control unit 5e has a function of controlling the phase shifter 7 in accordance with the temperature of the optical fiber stored in the phase control amount storage unit 16, in addition to the function of the phase control unit 5c. When resuming the control of the phase shifter 7, if the temperature of the optical fiber detected by the temperature monitoring unit 14 is stored in the phase control amount storage unit 16, the phase control unit 5e reads the amount of phase control corresponding to the temperature of the optical fiber from the phase control amount storage unit 16, and controls the phase shifter 7 in accordance with the read amount of phase control.

The control operation taught in above can be used in, for example, a product test as well as in practice. In the product test, once a temperature test is performed in the entire range of the operating temperature, it is possible to automatically control the amount of phase control to the optimal value, without using a control method which deteriorates the jitter characteristics, such as a hill-climbing method or synchronous detection.

However, in this case, the control operation does not respond to, for example, a case in which the length of the optical fiber is changed due to cutting or fusion. Therefore, in this case, it is necessary to clear the phase control amount storage unit 16.

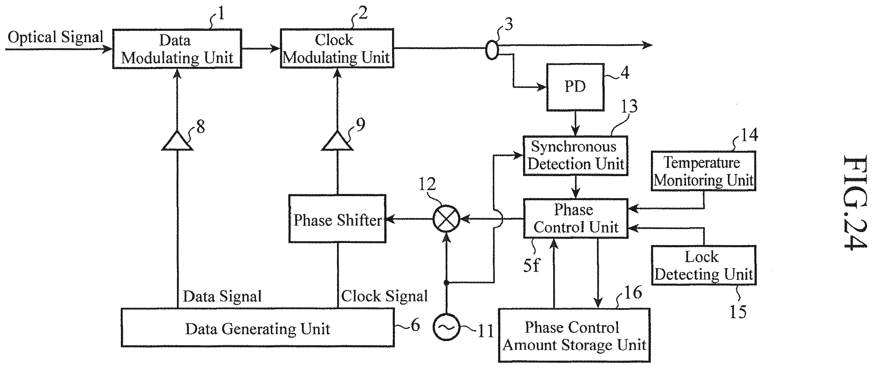

As illustrated in FIG. 24, this embodiment can also be applied to the optical transmitter according to Embodiment 2 which performs synchronous detection to control the phase shifter 7.

As described above, according to Embodiment 4, the optimal amount of phase control and the temperature of the optical fiber at the time when the optimal amount of phase control is obtained are stored. When the control of the phase shifter 7 is resumed, if the temperature of the optical fiber has already been stored, the amount of phase control corresponding to the temperature of the optical fiber is read and the phase shifter 7 is controlled. Therefore, it is possible to match the phases of two modulating signals without any influence on the jitter characteristics.

The optical transmitters according to the above-described embodiments of the present invention can automatically match the phases of the modulating signals using a simple method. This invention is suitable to be used in an optical transmitter which includes a plurality of optical modulators and has a function of controlling the phases of the modulating signals of the plurality of optical modulators.

## Claims

1. An optical transmitter, comprising:
- a data generating unit (6) configured to generate a plurality of modulating signals;
- a driver (8,9) configured to amplify the plurality of modulating signals generated by the data generating unit;
- a phase shifter (7) configured to control a phase of at least one signal among the plurality of modulating signals to be input to the driver;
- a plurality of optical modulators (1,2) connected in series to each other, and configured to modulate an optical signal on a basis of each of the modulating signals amplified by the driver;
- an optical coupler (3) configured to branch the optical signal modulated by the optical modulator arranged at a last stage in the series;
- a photodiode (4) configured to detect the optical signal branched by the optical coupler and converts the optical signal into an electric signal; and
- a phase control unit (5a) configured to control an amount of phase control of the phase shifter to maximize an intensity of the electric signal converted by the photodiode and further comprising:
- a temperature monitoring unit (14) configured to detect temperature of an optical fiber transmitting the optical signal; and
- a phase control amount storage unit (16) configured to store both the temperature detected by the temperature monitoring unit and the amount of phase control of the phase control unit, both the temperature and the amount of phase control corresponding to a point when the intensity of the electric signal converted by the photodiode indicates maximum value,
- wherein, when the temperature detected by the temperature monitoring unit is stored in the phase control amount storage unit, the phase control unit reads the amount of phase control corresponding to the detected temperature from the phase control amount storage unit and controls the phase shifter according to the read amount of phase control.

2. The optical transmitter according to claim 1,
wherein the phase shifter (7) is configured to control a phase of at least one signal among the optical signals to be input to the plurality of optical modulators.

3. An optical transmitter, comprising:
- a dither signal generating unit (11) configured to generate a dither signal;
- a data generating unit (6) configured to generate a plurality of modulating signals;
- a driver (8,9) configured to amplify the plurality of modulating signals generated by the data generating unit;
- a phase shifter (7) configured to control the phase of at least one signal among the plurality of modulating signals to be input to the driver with adding the dither signal generated by the dither signal generating unit;
- a plurality of optical modulators (1,2) connected in series to each other, and configured to modulate an optical signal on a basis of each of the modulating signals amplified by the driver;
- an optical coupler (3) configured to branch the optical signal modulated by the optical modulator arranged at a last stage in the series;
- a photodiode (4) configured to detect the optical signal branched by the optical coupler and converts the optical signal into an electric signal;
- a synchronous detection unit (13) configured to generate an error signal on a basis of both a dither signal included in the electric signal converted by the photodiode and the dither signal generated by the dither signal generating unit; and
- a phase control unit (5a) configured to control an amount of phase control of the phase shifter to minimize the error signal generated by the synchronous detection unit-and further comprising:
- a temperature monitoring unit (14) configured to detect temperature of an optical fiber transmitting the optical signal, and
- a phase control amount storage unit (16) configured to store both the temperature detected by the temperature monitoring unit and the amount of phase control of the phase control unit, both the temperature and the amount of phase control corresponding to a point when the error signal generated by the synchronous detection unit indicates minimum value,
- wherein, when the temperature detected by the temperature monitoring unit is stored in the phase control amount storage unit, the phase control unit reads the amount of phase control corresponding to the detected temperature from the phase control amount storage unit and controls the phase shifter in accordance with the read amount of phase control.

4. The optical transmitter according to claim 3,
wherein the phase shifter (7) is configured
to control a phase of at least one signal
among the optical signals to be input to the plurality of optical modulators with adding the dither signal generated by the dither signal generating unit.

5. The optical transmitter according to claim 3, further comprising:
- a lock detecting unit (15) configured to output a signal when the error signal generated by the synchronous detection unit (13) indicates equal to or less than a threshold value, the output signal indicating that the phase control unit is instructed to stop the control of the phase shifter,
- wherein the phase control unit controls the phase shifter according to both the temperature detected by the temperature monitoring unit and the signal output by the lock detecting unit.

6. The optical transmitter according to claim 1 or 3,
wherein the phase controller is further configured to,
when an intensity of the electric signal converted by the photodiode exceeds a predetermined threshold value, stop the control of the phase shifter and also store the temperature of the optical fiber, and
when a difference between the temperature detected by the temperature monitor and the stored temperature is equal to or more than a predetermined value, resume the control of the phase shifter.

## Patentansprüche

1. Optischer Sender, der Folgendes aufweist:
- eine Datenerzeugungseinheit (6), die dazu ausgebildet ist, eine Vielzahl von Modulationssignalen zu erzeugen;
- einen Treiber (8, 9), der dazu ausgebildet ist, die Vielzahl der von der Datenerzeugungseinheit erzeugten Modulationssignale zu verstärken;
- einen Phasenschieber (7), der dazu ausgebildet ist, eine Phase von mindestens einem Signal bei der Vielzahl von Modulationssignalen zu steuern, die in den Treiber eingegeben werden sollen;
- eine Vielzahl von optischen Modulatoren (1, 2), die in Reihe geschaltet sind und dazu ausgebildet sind, ein optisches Signal zu modulieren, und zwar basierend auf jedem der durch den Treiber verstärkten Modulationssignale;
- ein optischer Koppler (3), die dazu ausgebildet ist, das optische Signal zu verzweigen, das durch den optischen Modulator moduliert worden ist, der in der letzten Stufe der Reihe angeordnet ist;
- eine Photodiode (4), die dazu ausgebildet ist, das durch den optischen Koppler verzweigte optische Signal zu detektieren, und die das optische Signal in ein elektrisches Signal umwandelt; und
- eine Phasensteuereinheit (5a), die dazu ausgebildet ist, den Phasensteuerwert des Phasenschiebers zu steuern, um die Intensität des elektrischen Signals zu maximieren, das durch die Photodiode umgewandelt wird, und der ferner Folgendes aufweist:
- eine Temperaturüberwachungseinheit (14), die dazu ausgebildet ist, die Temperatur eines Lichtleiters zu detektieren, der das optische Signal überträgt; und
- eine Phasensteuerwert-Speichereinheit (16), die dazu ausgebildet ist, sowohl die von der Temperaturüberwachungseinheit detektierte Temperatur als auch den Phasensteuerwert der Phasensteuereinheit zu speichern, wobei sowohl die Temperatur als auch der Phasensteuerwert einem Punkt entsprechen, an dem die Intensität des von der Photodiode umgewandelten elektrischen Signals den Maximalwert angibt,
- wobei dann, wenn die von der Temperaturüberwachungseinheit detektierte Temperatur in der Phasensteuerwert-Speichereinheit gespeichert wird, die Phasensteuereinheit den Phasensteuerwert aus der Phasensteuerwert-Speichereinheit ausliest, der der detektierten Temperatur entspricht, und den Phasenschieber gemäß dem ausgelesenen Phasensteuerwert ansteuert.

2. Optischer Sender nach Anspruch 1,
wobei der Phasenschieber (7) dazu ausgebildet ist, eine Phase von mindestens einem Signal von den optischen Signalen zu steuern, die in die Vielzahl der optischen Modulatoren eingegeben werden sollen.

3. Optischer Sender, der Folgendes aufweist:
- eine Zittersignal-Erzeugungseinheit (11), die dazu ausgebildet ist, ein Zittersignal zu erzeugen;
- eine Datenerzeugungseinheit (6), die dazu ausgebildet ist, eine Vielzahl von Modulationssignalen zu erzeugen;
- einen Treiber (8, 9), der dazu ausgebildet ist, die Vielzahl der von der Datenerzeugungseinheit erzeugten Modulationssignale zu verstärken;
- einen Phasenschieber (7), der dazu ausgebildet ist, die Phase von mindestens einem Signal der Vielzahl von Modulationssignalen zu steuern, die in den Treiber eingegeben werden sollen, wobei das von der Zittersignal-Erzeugungseinheit erzeugte Zittersignal hinzugefügt wird;
- eine Vielzahl von optischen Modulatoren (1, 2), die in Reihe geschaltet sind, und dazu ausgebildet sind, ein optisches Signal zu modulieren, und zwar basierend auf jedem der durch den Treiber verstärkten Modulationssignale;
- einen optischen Koppler (3), der dazu ausgebildet ist, das optische Signal zu verzweigen, das durch den optischen Modulator moduliert worden ist, der in der letzten Stufe der Reihe angeordnet ist;
- eine Photodiode (4), die dazu ausgebildet ist, das durch den optischen Koppler verzweigte optische Signal zu detektieren und das optische Signal in ein elektrisches Signal umzuwandeln;
- eine synchrone Detektionseinheit (13), die dazu ausgebildet ist, ein Fehlersignal zu erzeugen, und zwar basierend sowohl auf einem Zittersignal, das in dem von der Photodiode umgewandelten elektrischen Signal enthalten ist, als auch dem von der Zittersignal-Erzeugungseinheit erzeugten Zittersignal; und
- eine Phasensteuereinheit (5a), die dazu ausgebildet ist, einen Phasensteuerwert des Phasenschiebers zu steuern, um das von der synchronen Detektionseinheit erzeugte Fehlersignal zu minimieren, und der ferner Folgendes aufweist:
- eine Temperaturüberwachungseinheit (14), die dazu ausgebildet ist, die Temperatur eines Lichtleiters zu detektieren, der das optische Signal überträgt, und
- eine Phasensteuerwert-Speichereinheit (16), die dazu ausgebildet ist, sowohl die von der Temperaturüberwachungseinheit detektierte Temperatur als auch den Phasensteuerwert der Phasensteuereinheit zu speichern, wobei sowohl die Temperatur als auch der Phasensteuerwert einem Punkt entsprechen, an dem das von der synchronen Detektionseinheit erzeugte Fehlersignal einen Minimalwert angibt,
- wobei dann, wenn die von der Temperaturüberwachungseinheit detektierte Temperatur in der Phasensteuerwert-Speichereinheit gespeichert wird, die Phasensteuereinheit den der detektierten Temperatur entsprechenden Phasensteuerwert aus der Phasensteuerwert-Speichereinheit ausliest und den Phasenschieber gemäß dem ausgelesenen Phasensteuerwert ansteuert.

4. Optischer Sender nach Anspruch 3,
wobei der Phasenschieber (7) dazu ausgebildet ist, eine Phase von mindestens einem Signal von den optischen Signalen zu steuern, die in die Vielzahl der optischen Modulatoren eingegeben werden sollen, wobei das von der Zittersignal-Erzeugungseinheit erzeugte Zittersignal hinzugefügt wird.

5. Optischer Sender nach Anspruch 3
der ferner Folgendes aufweist:
- eine Sperrdetektionseinheit (15), die dazu ausgebildet ist, ein Signal auszugeben, wenn das von der synchronen Detektionseinheit (13) erzeugte Fehlersignal gleich einem oder kleiner als ein Schwellenwert ist, wobei das Ausgangssignal angibt, dass die Phasensteuereinheit dazu angewiesen ist, die Steuerung des Phasenschiebers zu stoppen,
- wobei die Phasensteuereinheit den Phasenschieber sowohl gemäß der von der Temperaturüberwachungseinheit detektierten Temperatur als auch gemäß dem von der Sperrdetektionseinheit ausgegebenen Signal steuert.

6. Optischer Sender nach Anspruch 1 oder 3,
wobei die Phasensteuerung ferner dazu ausgebildet ist, um die Steuerung des Phasenschiebers zu stoppen und ferner die Temperatur des Lichtleiters zu speichern, wenn die Intensität des von der Photodiode umgewandelten elektrischen Signals einen vorbestimmten Schwellenwert überschreitet, und um die Steuerung der Phasenverschiebung wieder aufzunehmen, wenn die Differenz zwischen der von der Temperaturüberwachung detektierten Temperatur und der gespeicherten Temperatur gleich einem oder größer als ein vorgegebener Wert ist.

## Revendications

1. Émetteur optique, comprenant :
- une unité de génération de données (6) configurée pour générer une pluralité de signaux de modulation ;
- un pilote (8, 9) configuré pour amplifier la pluralité de signaux de modulation générer par l'unité de génération de données ;
- un décaleur de phase (7) configuré pour commander une phase d'au moins un signal parmi la pluralité de signaux de modulation à injecter vers le pilote ;
- une pluralité de modulateurs optiques (1, 2) connectés en série les uns aux autres, et configurés pour moduler un signal optique sur la base de chacun des signaux de modulation amplifiés par le pilote ;
- un coupleur optique (3) configuré pour ramifier le signal optique modulé par le modulateur optique agencé au niveau d'un dernier étage dans la série ;
- une photodiode (4) configurée pour détecter le signal optique ramifié par le coupleur optique et pour convertir le signal optique en un signal électrique ; et
- une unité de commande de phase (5a) configurée pour commander une quantité de commande de phase de décaleur de phase afin de maximiser une intensité du signal électrique converti par la photodiode, et comprenant en outre :
- une unité de surveillance de température (14) configurée pour détecter la température d'une fibre optique qui transmet le signal optique ; et
- une unité de stockage de quantité de commande de phase (16) configurée pour stocker à la fois la température détectée par l'unité de surveillance de température et la quantité de commande de phase de l'unité de commande de phase, la température et la quantité de commande de phase correspondant à un point auquel l'intensité du signal électrique converti par la photodiode indiquent à la fois une valeur maximum,
- dans lequel, quand la température détectée par l'unité de surveillance de température est stockée dans l'unité de stockage de quantité de commande de phase, l'unité de commande de phase lit la quantité de commande de phase correspondant à la température détectée depuis l'unité de stockage de quantité de commande de phase et elle commande le décaleur de phase en accord avec la quantité lue de commande de phase.

2. Émetteur optique selon la revendication 1,
dans lequel le décaleur de phase (7) est configuré pour commander une phase au moins un signal parmi les signaux optiques à injecter vers la pluralité de modulateurs optiques.

3. Émetteur optique, comprenant :
- une unité de génération de signal de tremblement (11) configurée pour générer un signal de tremblement ;
- une unité de génération de données (6) configurée pour générer une pluralité de signaux de modulation ;
- un pilote (8, 9) configuré pour amplifier la pluralité de signaux de modulation générés par l'unité de génération de données ;
- un décaleur de phase (7) configuré pour commander la phase d'au moins un signal parmi la pluralité de signaux de modulation à injecter vers le pilote en ajoutant le signal de tremblement généré par l'unité de génération de signal de tremblement ;
- une pluralité de modulateurs optiques (1, 2) connectés en série les uns aux autres, et configurés pour moduler un signal optique sur la base de chacun des signaux de modulation amplifiés par le pilote ;
- un coupleur optique (3) configuré pour ramifier le signal optique modulé par le module capteur optique agencé au niveau d'un dernier étage dans la série ;
- une photodiode (4) configurés pour détecter le signal optique ramifié par le coupleur optique et pour convertir le signal optique en un signal électrique ;
- une unité de détection synchrone (13) configurée pour générer un signal d'erreur sur la base à la fois d'un signal de tremblement inclut dans le signal électrique converti par la photodiode et du signal de tremblement généré par l'unité de génération de signal de tremblement ; et
- une unité de commande de phase (5a) configurée pour commander une quantité de commande de phase du décaleur de phase pour minimiser le signal d'erreur généré par l'unité de détection synchrone, et comprenant en outre :
- une unité de surveillance de température (14) configurée pour détecter la température d'une fibre optique qui transmet le signal optique, et
- une unité de stockage de quantité de commande de phase (16) configurée pour stocker à la fois la température détectée par l'unité de surveillance de température et la quantité de commande de phase de l'unité de commande de phase, la température et la quantité de commande de phase correspondant à un point quand le signal d'erreur généré par l'unité de détection synchrone à la fois indiquent une valeur minimum,
- dans lequel, quand la température détectée par l'unité de surveillance de température est stockée dans l'unité de stockage de quantité de commande de phase, l'unité de commande de phase lit la quantité de commande de phase correspondant à la température détectée depuis l'unité de stockage de quantité de commande de phase et elle commande le décaleur de phase en accord avec la quantité lue de commande de phase.

4. Émetteur optique selon la revendication 3,
dans lequel le décaleur de phase (7) est configuré pour commander une face d'au moins un signal parmi les signaux optiques à injecter vers la pluralité de modulateurs optiques en ajoutant le signal de tremblement généré par l'unité de génération de signal de tremblement.

5. Émetteur optique selon la revendication 3,
comprenant en outre :
- une unité de détection de blocage (15) configurée pour délivrer un signal quand le signal d'erreur généré par l'unité de détection synchrone (13) indique qu'il est égal ou inférieur à une valeur seuil, le signal de sortie indiquant que l'unité de commande de phase a reçu instruction d'arrêter la commande du décaleur de phase,
- dans lequel l'unité de commande de phase commande le décaleur de phase en accord à la fois avec la température détectée par l'unité de surveillance de température et le signal délivré par l'unité de détection de blocage.

6. Émetteur optique selon la revendication 1 ou 3,
dans lequel le contrôleur de phase est en outre configuré pour quand une intensité du signal électrique converti par la photodiode excède une valeur seuil prédéterminée, arrêter le commande du décaleur de phase et également stocker la température du fibre optique, et
quand une différence entre la température détectée par l'unité de surveillance de température et la température stockée est égale ou inférieure à une valeur prédéterminée, il reprend la commande du décaleur de phase.
